Europäisches Patentamt

European Patent Office

Office européen des brevets

(19)

(11) Publication number: 0 367 120 A1

# EUROPEAN PATENT APPLICATION

(12)

(21) Application number: 89119933.3

(22) Date of filing: 26.10.89

(51) Int. Cl.⁵: C09J 131/04 , C08G 18/62 , //(C09J131/04,129:04,175:04)

(30) Priority: 28.10.88 US 264114

(43) Date of publication of application:
09.05.90 Bulletin 90/19

(84) Designated Contracting States:
BE DE ES FR GB IT NL

(71) Applicant: AIR PRODUCTS AND CHEMICALS, INC.
Route no. 222
Trexlertown Pennsylvania 18087(US)

(72) Inventor: Horwat, David William
4730 Canterbury Drive
Emmaus PA 18049(US)

(74) Representative: Dipl.-Ing. Schwabe, Dr. Dr.
Sandmair, Dr. Marx
Stuntzstrasse 16
D-8000 München 80(DE)

(54) Vinyl laminating adhesive composition.

(57) A water-based adhesive composition, specially suited for laminating vinyl substrates to wood substrates comprising an adhesive component consisting essentially of
(a) 75 to 98.5 wt% vinyl acetate-ethylene emulsion copolymer of 10-50 wt% toluene insolubles and -20 to 10°C Tg, preferably prepared by the emulsion polymerization of vinyl acetate and ethylene in the presence of a suspending system consisting essentially of polyvinyl alcohol, and
(b) 1.5 to 25 wt% essentially solvent-free, water dispersible polyisocyanate the adhesive component the adhesive component being dispersed in sufficient water to provide a viscosity of 1500 to 10,000 cps.

EP 0 367 120 A1

# VINYL LAMINATING ADHESIVE COMPOSITION

## TECHNICAL FIELD

The invention relates to water-based adhesive compositions containing an isocyanate compound.

## BACKGROUND OF THE INVENTION

The mobile home vinyl laminating industry requires heat and creep resistance which exceeds the performance of most vinyl laminating adhesives. Two part solvent-borne urethane and epoxy adhesives are used to achieve the performance. Both these adhesive compositions are expensive, are difficult to handle, store and process, and contain hazardous solvents or components.

Several one-component, aqueous vinyl acetate-ethylene (VAE) copolymer adhesive formulations have been tried with failure. Prior to the present invention it was believed that all water-borne VAE formulations would fail the required heat/creep test.

U.S. 3,931,088 discloses an adhesive composition comprising

(1) a member selected from the group consisting of an aqueous solution of polyvinyl alcohol, an aqueous emulsion of vinyl acetate polymer and an aqueous latex of butadiene polymer, and

(2) a hydrophobic solution of an isocyanate compound or polymer.

U.S. 4,396,738 discloses aqueous adhesive and coating compositions comprising

(1) an aqueous emulsion or dispersion of a polymer or interpolymer of one or more vinyl monomers such as an emulsion of a copolymer or vinyl acetate and butyl acrylate and

(2) an aqueous emulsion or dispersion of a polyisocyanate which has at least partially reacted with an alcohol having the formula ROH wherein R is a hydrocarbon radical having at least one carbon atom and wherein the dispersion or emulsion (2) is stabilized with a combined surfactant and alcohol, having the formula $R'$ wherein $R'$ is a hydrocarbon radical having at least one carbon atom as described.

U.S. 4,433,095 discloses aqueous adhesives which are based on water-dispersible polymers and which contain water-dispersible polyisocyanate preparations having an average NCO-functionality of at least 2.2, which, in addition to an aromatic polyisocyanate or a mixture of aromatic polyisocyanates, contain a quantity of emulsifiers sufficient to guarantee the dispersibility of the polyisocyanates, as additives capable of improving the bonding properties of these adhesives.

U.S. 4,491,646 discloses an aqueous latex adhesive composition of the type having an aqueous latex admixture with an organic solvent-dispersed multi-isocyanate cross-linking agent and a thickener. The improvement for a room temperature curable adhesive composition having improved water-resistance comprises the curable ingredients consisting essentially of an aqueous hydroxyl functional acrylic latex which contains hydroxyl groups as the only isocyanate reactive functionality and the multi-isocyanate cross-linking agent.

U.S. 4,609,690 discloses an aqueous latex adhesive composition which is an aqueous latex admixture with a water dispersible multi-isocyanate cross-linking agent and a thickener. The improvement for a room temperature curable adhesive composition having improved water-resistance comprises the curable ingredients consisting essentially of an aqueous hydroxyl functional latex which contains hydroxyl groups as its only isocyanate reactive functionality and the multi-isocyanate cross-linking agent. The cross-linking agent is a water dispersible or water dispersed multi-isocyanate and preferably is a multi-isocyanate which has undergone partial reaction of some of its isocyanate groups with a hydrophobic monohydroxy alcohol.

## SUMMARY OF THE INVENTION

The present invention provides a water based adhesive composition for vinyl laminating applications which demonstrates good pot life and good heat resistance without the loss of peel adhesion. The adhesive composition comprises an aqueous medium containing an adhesive component which consists essentially of

(a) 75-98.5 wt% vinyl acetate-ethylene emulsion copolymer of 10-50 wt% toluene insolubles and -20 to 10°C Tg,

(b) 1.5-25 wt% substantially solvent-free, water dispersible polyisocyanate compound or polymer, the adhesive component being dispersed in an amount of water such as to yield a viscosity of 1500 to 10,000 cps. Suitably, the aqueous medium would contain 50 to 75 wt% of the adhesive component.

It is preferred that the vinyl acetate-ethylene copolymer be prepared by the emulsion polymerization of sufficient quantities of the monomers in the presence of a stabilizing system consisting essentially of polyvinyl alcohol, preferably 2-5 wt% polyvinyl alcohol and 0.3-4 wt% nonionic polyalkoxylated surfactant, based on vinyl acetate, such that the emulsion polymerization reaction yields a vinyl acetate-ethylene copolymer emulsion which is at least 60 wt% solids.

Another embodiment of the invention provides a method for laminating a vinyl substrate to a wood substrate which comprises applying a coating of the above water-based adhesive composition to a surface of one of the substrates, partially drying the adhesive coating and joining the adhesive-coating surface with a surface of the other substrate.

The aqueous laminating adhesive compositions of the invention also obviate the environmental and health concerns associated with solvent-based adhesives.


## DETAILED DESCRIPTION OF THE INVENTION


The water-based adhesive composition comprises an aqueous medium containing an adhesive component which comprises a vinyl acetate-ethylene emulsion copolymer and a polyisocyanate compound or polymer.

Perhaps the most important ingredient of the water-based adhesive composition according to the present invention is the vinyl acetate-ethylene emulsion copolymer. The adhesive component contains 75-98.5 wt%, preferably 87-93 wt%, of a vinyl acetate-ethylene copolymer which has 10-50%, preferably 20-40%, toluene insolubles and a Tg of -20 to +10°C, preferably -5 to +5°C. A copolymer that is 70 to 85 wt% vinyl acetate and 15 to 30 wt% ethylene would provide a suitable Tg. Preferably, the copolymer contains 75-80 wt% vinyl acetate and 20-25 wt% ethylene.

The adhesive composition can also be described as an aqueous vinyl acetate-ethylene copolymer emulsion, which is at least 60 wt% solids, preferably 65-70 wt% solids, the copolymer having 10-50% toluene insolubles and a Tg of -20 to 10°C, containing 1 to 20 wt%, based on emulsion, of a substantially solvent-free, water dispersible polyisocyanate material. Water may be added to adjust viscosity which should be within the range of 1500 to 10,000 cps, preferably 4000 to 5000 cps.

Most advantageously, the vinyl acetate-ethylene copolymer is prepared by the emulsion polymerization of the vinyl acetate and ethylene monomers in the presence of a polyvinyl alcohol suspending system. Desirably, this suspending system consists essentially of 2-5 wt% polyvinyl alcohol and 0.3-4 wt% nonionic polyalkoxylated surfactant. The wt% ranges are based on vinyl acetate monomer. It is also preferred that the amount of vinyl acetate and ethylene monomers used in the emulsion polymerization should be such that the resulting emulsion is at least 60 to 75% solids, preferably 65-70% solids.

Contemplated as the functional, or operative equivalents of vinyl acetate in the copolymer emulsions are vinyl esters of $C_1$-$C_{18}$ alkanoic acids, such as vinyl formate, vinyl propionate, vinyl laurate and the like.

The vinyl acetate-ethylene copolymers may optionally include one or more additional ethylenically unsaturated copolymerizable monomers provided the toluene insolubles criterion is satisfied. Exemplary of such comonomers, which may be present at up to 10 wt% or more, are $C_3$-$C_{10}$ alkenoic acids, such as acrylic acid, methacrylic acid, crotonic acid and isocrotonic acid and their esters with $C_1$-$C_{18}$ alkanols, such as methanol, ethanol, propanol, butanol, and 2-ethylhexanol; vinyl halides such as vinyl chlorides; alpha,beta-unsaturated $C_4$-$C_{10}$ alkenedioic acids such as maleic acid, fumaric acid and itaconic acid and their monoesters and diesters with the same $C_1$-$C_{18}$ alkanols; and nitrogen containing monoolefinically unsaturated monomers, particularly nitriles, amides, N-methylol amides, lower alkanoic acid esters of N-methylol amides, lower alkyl ethers of N-methylol amides and allylcarbamates, such as acrylonitrile, (meth)-acrylamide, N-methylol (meth)acrylamide, N-methylol allylcarbamate, and lower alkyl ethers or lower alkanoic acid esters of N-methylol (meth)acrylamide and N-methylol allylcarbamate. If such additional ethylenically unsaturated comonomer is used, about 2-5 wt% is preferred.

The stabilizing system used in the polymerization reaction preferably is added to the polymerization reaction all at once prior to initiation, but may be added incrementally during the course of polymerization, provided a sufficient amount is present initially to provide emulsion stability.

The stabilizing system for preparing the preferred copolymer emulsions of the laminating adhesive composition consists essentially of 2-5 wt% of polyvinyl alcohol and 0.3-4 wt% of nonionic polyalkoxylated surfactant. The polyvinyl alcohol which is used in the stabilizing system can be 75-99 + mole% hydrolyzed, preferably 86-88 mole% hydrolyzed, and has a degree of polymerization ranging from 100-600, i.e. a low molecular weight polyvinyl alcohol. (Another means for assessing the degree of polymerization of polyvinyl alcohol is its viscosity as a 4 wt% aqueous solution at 20°C. Suitable polyvinyl alcohols would have a viscosity ranging from 2.4 to about 7.) Higher molecular weight polyvinyl alcohols may also be included provided the requisite lower molecular weight polyvinyl alcohol is present.

The polyvinyl alcohol component of the stabilizing system may consist essentially of a mixture of a 98-99 + mole% hydrolyzed (fully) polyvinyl alcohol and an 86-90 mole% hydrolyzed (partially) polyvinyl alcohol, preferably 86-88 mole% hydrolyzed. The fully and partially hydrolyzed polyvinyl alcohols should have a degree of polymerization ranging from 100-600, although small amounts of polyvinyl alcohol having a higher degree of polymerization can also be present.

The relative amount of each type of polyvinyl alcohol that is used in such mixture would be in the range of 3:1 to 1:3 weight ratio of fully hydrolyzed polyvinyl alcohol to partially hydrolyzed polyvinyl alcohol, desirably at a 2:3 weight ratio.

In addition to the polyvinyl alcohol component, the stabilizing system also contains a nonionic polyoxyethylene condensate surfactant (polyethoxylated surfactant) in an amount ranging from 0.3-4 wt% based on vinyl acetate. The polyethoxylated surfactants have repeating ethylene oxide units as represented by: $-(CH_2CH_2O)_n-$. The nonionic surfactant is ideally a polyethoxylated derivative of an alkyl phenol or a hydrophobic base formed by condensing propylene oxide with propylene glycol. Most advantageously the surfactants contain up to about 30 to 40 ethylene oxide units, especially about 30 units.

Among the nonionic polyethoxylated surfactants which provide good results are included certain Igepal surfactants marketed by GAF Corp. and the Pluronic surfactants marketed by BASF Wyandotte. The Igepal surfactants are the members of homologous series of alkylphenoxy poly(ethyleneoxy) ethanols which can be represented by the general formula:

$$R^1\text{-Ph-O}(CH_2CH_2O)_{n-1}\text{---}CH_2CH_2OH$$

wherein $R^1$ represents an alkyl radical, Ph represents a phenylene radical and n represents the number of moles of ethylene oxide employed, among which are alkylphenoxy poly(ethyleneoxy) ethanols having alkyl groups containing from about 7 to about 18 carbon atoms, inclusive, preferably 8 or 9 carbon atoms, and having from about 4 to about 100 ethyleneoxy units, such as the heptylphenoxy poly(ethyleneoxy) ethanols, nonylphenoxy poly(ethyleneoxy) ethanols and dodecylphenoxy poly(ethyleneoxy) ethanols; alkyl poly-(ethyleneoxy) ethanols; and alkyl poly(propyleneoxy) ethanols. The Pluronic surfactants are condensates of ethylene oxide with a hydrophobic base formed by condensing propylene oxide with propylene glycol, and the like. For purposes of the invention, the polyethyleneoxy surfactant advantageously should contain about 30 to 40 ethylene oxide units.

In general, suitable vinyl acetate-ethylene copolymer emulsions can be prepared by copolymerization of the monomers in the presence of the polyvinyl alcohol-surfactant stabilizing system by aqueous emulsion polymerization techniques well known in the art. Such polymerization techniques are described in such texts as Polymer Synthesis, Volume I and II, by S. R. Sandler and W. Karo, Academic Press, New York and London (1974), and Preparative Methods of Polymer Chemistry, Second Edition, by W. R. Sorenson and T. W. Campbell, Inter Science Publishers (John Wiley and Sons), New York (1968). In addition, U.S. Patents 3,661,696; 3,734,819 and 3,769,151 show the preparation of vinyl acetate-ethylene copolymer emulsions using a polyvinyl alcohol-nonionic surfactant stabilizing system at solids content of 60% and more.

EP 0 279 384 which corresponds to copending application Serial No. 015,194 filed 17 February 1987 discloses vinyl acetate-ethylene copolymer emulsions suitable for the present invention, which disclosure is hereby incorporated by reference.

Vinyl acetate-ethylene copolymer emulsions of at least 60 wt% solids suitable for practicing the invention are commercially available from Air Products and Chemicals, Inc. as Airflex® 465 and CA-52 emulsions.

In addition to vinyl acetate-ethylene emulsion copolymer, the adhesive component of the aqueous laminating adhesive composition also contains about 1.5 to 25 wt%, preferably 7 to 13 wt%, isocyanate compound or polymer to crosslink, it is believed, the emulsion copolymer through the reaction with the polyvinyl alcohol. Furthermore, when the isocyanate reacts with the water present, it ultimately forms a polymer interface between the polymer particles and the dried film. Both these reactions are believed to reinforce the bond, thus improving heat resistance.

The polyisocyanate material should be dispersible in the aqueous VAE copolymer emulsion such that at least a one hour dispersion stability is achieved. Stability beyond about 16 hours is not necessary since the adhesive composition would in almost all instances be used within 16 hours of preparation. The polyisocyanate material should have a functionality of greater than 2, preferably greater than 2.5, and ideally about 3. Suitable solvent-free, water dispersible isocyanate compounds include those taught in the U.S. 4,433,095, which is incorporated by reference, and those materials commercially available from ICI Americas, Inc. such as Rubinate MF-178, Rubinate 2259 and Rubinate 2236. Rubinate MF-178 is an emulsifiable polymeric diphenylmethane diisocyante. U.S. 3,996,154 discloses suitable solvent-free, dispersible organic isocyanates, which is incorporated by reference.

At less than about 1.5 wt% isocyanate material in the adhesive component, the laminating adhesive composition loses heat resistance. At greater than about 25 wt%, the laminating composition loses adhesion. It is preferred that about 5 to 10 wt% polyisocyanate material (wet basis) be simply blended with the appropriate amount of the vinyl acetate-ethylene copolymer emulsion.

The components are simply mixed in the specified amounts to yield a water-based laminating adhesive composition that will firmly bond such materials as plastic films like vinyl chloride, polyester, metallized polyester and polystyrene, porous substrates like wood, hardwood, plywood and particle wood, and metal to themselves and to each other, especially vinyl chloride to wood substrates. Since the vinyl acetate-ethylene copolymer will be an aqueous emulsion, the polyisocyanate material is merely mixed gently into the emulsion and diluted with water, if necessary, to obtain an appropriate viscosity for application.

The toluene insolubles value is a measurement of insoluble, high molecular weight (crosslinked) material in a polymer sample. The method for measuring toluene insolubles is as follows:

A film of the copolymer emulsion (approximately 40-50 mil wet) is cast on polyethylene film and allowed to air dry overnight. A sample (approximately 3.5 g) of the dry polymer film is then continuously extracted with toluene (275-300 ml) in SOXHLET extraction apparatus under moderate reflex for 64 hours. The extracted, wet film is dried in a tared vessel at 100-110°C until dry. The percent toluene insolubles is then calculated by the following equation:

$$\text{\% Toluene Insolubles} = \frac{\text{wt. dried, extracted polymer} \times 100}{\text{wt. film sample}}$$

For a water-borne adhesive composition to compete against solvent-borne urethane adhesives for bonding vinyl to wood, high heat resistance and creep resistance are needed. The testing for such performance is accomplished by an industry test for heat/creep resistance at 170°F as follows:

A 6"x6" sample of the vinyl-clad wood panel is placed at a 45 degree angle in a recirculating oven and a 4 lb. steel weight with contact area 1" wide x 2" high is placed in the center of the sample. The steel weight is prepared by coating the contact surface with contact cement and curing at 170°F minimum for 24 hours before it is placed on the sample. The oven is held at 170°F for 24 hours and the vinyl below the lower edge of the weight is checked periodically for signs of wrinkling. Any wrinkle or bubble constitutes failure.

It has been determined that a water-borne VAE laminating adhesive composition must accomplish the following in order to be acceptable to the industry:

1. Produce no wrinkling or creep under the nose of the weight.

2. Maintain a fiber tearing bond under the weight after 24 hours at 170°F.

3. Not show any loss of adhesion or strength under the weight when cut open with a razor after the 24 hour testing is completed.

4. When the weight is removed rapidly, no bubbles or vinyl delamination can occur.

In the following examples, the pot-life of the aqueous adhesive compositions were determined by mixing 250g of the VAE copolymer emulsion with the indicated amount of polyisocyanate material in a 3-1/2" x 3-1/2"D jar (one-half filled with composition). The end of the pot-life was that point in time when foam rose over the lip of the container (corresponds to about 66% foam in the container).

## EXAMPLE 1

In this example Airflex 465 VAE copolymer emulsion having 66% solids, 1200 cps viscosity and a pH of 4.6 was used. The specification for an Airflex 465 copolymer is toluene insolubles 30-40% and Tg of -5°C. Rubinate MF-178 isocyanate crosslinker was added at a level of 5% (wet basis) to the copolymer emulsion. The resulting adhesive composition had a 6 hour pot-life with minimal foaming due to the isocyanate/water reaction and exhibited 20% foam at 8 hours with a vinyl/wood adhesive strength of 14-15 pli. In this example the isocyanate material was added to the emulsion under low shear conditions (gentle stirring).

EXAMPLE 2

It is important that the isocyanate cross-linker be added slowly with minimal shearing action (gentle stirring). A high shear mixer should not be used because it can result in the creation of small isocyanate particles with large surface area, causing the isocyanate material to react more rapidly with water due to the increased contact area between the isocyanate and the water. This is borne out by the results shown in Table 1 which shows the pot life for Airflex 465 copolymer emulsion containing various amounts of the isocyanate material blend using a high shear mixer.

Table 1

| Airflex 465 | Rubinate MF-178 Isocyanate | Adhesion Vinyl/Wood | Pot-Life |
|---|---|---|---|
| 100 parts | 0 parts (wet basis) | 9-10 pli | - |
| 100 parts | 1 parts | 9-10 pli | 10% foam* |
| 100 parts | 3 parts | 11-14 pli | 25% foam* |
| 100 parts | 5 parts | 14-18 pli | 1 hour |
| 100 parts | 7 parts | 15-18 pli | 3/4 hour |
| 100 parts | 9 parts | Not run | 20 minutes |

*Foam did not overflow the container

It can be seen that the pot-life of the adhesive composition is significantly less than that obtained in Example 1 in which low shear mixing was employed.

EXAMPLE 3

In this example the laminating adhesive composition prepared according to Example 1 was evaluated by the heat/creep resistance test (170° F) at various pot-lives. Table 2 shows that the adhesive composition passed the test at all pot-lives tested.

Table 2

| Airflex 465 | Rubinate MF-178 | Result | At a Pot Life of: |
|---|---|---|---|
| 100 parts | 5 pph | Pass | 30 minutes |
| 100 parts | 5 pph | Pass | 1 hour |
| 100 parts | 5 pph | Pass | 2 hours |
| 100 parts | 5 pph | Pass | 4 hours |
| 100 parts | 5 pph | Pass | 6 hours |
| 100 parts | 5 pph | Pass | 8 hours |

VAE Emulsion B containing 5 parts Rubinate MF-178 isocyanate per hundred parts emulsion did not pass the heat/creep resistance test (170° F).

EXAMPLE 4

6

In this example numerous VAE copolymer emulsions further identified in Table 4 and containing various amounts of Rubinate MF-178 isocyanate were evaluated for peel adhesion at room temperature (RT) and creep resistance at 77°C using a 100g weight. A polyvinyl chloride/cloth (un-sized) laminate was prepared using each adhesive composition. This vinyl/cloth test provides a good means for predicting vinyl/wood laminate performance.

Table 3

| Emulsion | Rubinate MF-178 (pph wet) | R.T. (pli) | 77°C Creep (mm/min) |
|---|---|---|---|
| A | 0 | 3.6 | 6.1 |
|   | 5 | 5.6 | 1.1 |
|   | 10 | 5.4 | 1.6 |
|   | 15 | 5.3 | 1.8 |
| B | 0 | 3.0 | 8.0+ |
|   | 5 | 3.6 | 1.8 |
|   | 10 | 3.3 | 1.8 |
|   | 15 | 3 | 1.9 |
| C | 0 | 3.7 | 9.8 |
|   | 5 | 1.9 | 5.7 |
|   | 10 | 1.3 | 17.4 |
|   | 15 | 1.2 | 9.4 |
| D | 0 | 3.8 | 6.7 |
|   | 5 | 4.0 | 1.7 |
|   | 10 | 4.2 | 2.2 |
|   | 15 | 3.4 | 2.3 |
| E | 0 | 2.4 | 9+ |
|   | 5 | 2.7 | 9+ |
|   | 10 | 3.1 | 9.6+ |
|   | 15 | 3.1 | 9.8+ |
| F | 0 | 1.9 | 12.9 |
|   | 5 | 3.7 | 3.8 |
|   | 10 | 2.8 | 2.9 |
|   | 15 | 2.5 | 2.5 |
| G | 0 | 0.5 | 118.8 |
|   | 5 | 1.1 | 3.5 |
|   | 10 | 1.0 | 2.1 |
|   | 15 | 0.9 | 2.1 |

It can be seen from the data in Table 3 that only Emulsion A, which meets the criteria for being an acceptable VAE emulsion for making the laminating adhesive composition according to the invention, provides superior peel strength and high creep resistance.

TABLE 4

| | VAE Emulsions | | | Stabilizing System (Based on VAM) | | |
|---|---|---|---|---|---|---|
| Emulsion | % Solids | Tg(°C) | % Tol Insol | % PVOH | % HEC | % Non Ionic Surfactant |
| A | 66 | -3 | 31 | 3 | 0 | 3 |
| B | 55 | 0 | 65 | 5 | 0 | 0 |
| C * | 52 | 4 | 30 | 0 | 1 | 3 |
| D | 55 | 6 | 25 | 0 | 1 | 3 |
| E | 55 | -15 | 68 | 6 | 0 | 0 |
| F * | 62 | 0 | 53 | 3 | 0 | 3 |
| G | 55 | 18 | 58 | 4 | 0 | 0 |

* Carboxylate-containing VAE copolymer

## STATEMENT OF INDUSTRIAL APPLICATION

The present invention provides an aqueous VAE copolymer laminating adhesive composition, especially suitable for laminating vinyl to wood substrates.

## Claims

1. A water-based laminating adhesive composition comprising an adhesive component consisting essentially of
(a) 75-98.5 wt% vinyl acetate-ethylene emulsion copolymer of 10-50 wt% toluene insolubles and -20 to 10° Tg, prepared by the aqueous copolymerization of vinyl acetate and ethylene in the presence of a polyvinyl alcohol containing stabilizing system and
(b) 1.5-25 wt% substantially solvent-free, water dispersible polyisocyanate material,
the adhesive component being dispersed in sufficient water to provide a viscosity of 1500 to 10,000 cps.

2. The laminating adhesive composition of Claim 1 in which the adhesive component consists essentially of 87-93 wt% vinyl acetate-ethylene copolymer and 7-13 wt% polyisocyanate material.

3. The laminating adhesive composition of Claim 2 which has a viscosity of 4000-5000 cps.

4. The laminating adhesive composition of Claim 1 in which the vinyl acetate-ethylene copolymer comprises 20-40 wt% toluene insolubles.

5. The laminating adhesive composition of Claim 1 in which the polyisocyanate material is a polymeric diphenylmethane diisocyanate.

6. A water-based laminating adhesive composition consisting essentially of
(a) an aqueous vinyl acetate-ethylene copolymer emulsion which is at least 60 wt% solids, the emulsion being prepared in the presence of a suspending system consisting essentially of 2-5 wt% low molecular weight polyvinyl alcohol and 0.3-4 wt% polyethoxylated derivative of an alkylphenol or a hydrophobic base formed by condensing propylene oxide with propylene glycol, the copolymer having 10-50% toluene insolubles and a Tg of -20 to 10° C, and
(b) 1 to 20 wt% (based on emulsion) substantially solvent-free, water dispersible polyisocyanate.

7. The laminating adhesive composition of Claim 6 which contains 5-10 wt% polyisocyanate (based on emulsion).

8. The laminating adhesive composition of Claim 7 in which the copolymer has 20-40% toluene insolubles.

9. The laminating adhesive composition of Claim 6 in which the polyisocyanate is a polymeric diphenylmethane diisocyanate.

10. A method for laminating a vinyl substrate to a wood substrate which comprises applying a coating of the water-based laminating adhesive composition of Claim 1 to a surface of the wood substrate, partially drying the laminating adhesive coating and joining the vinyl substrate to the adhesive coated surface of the wood substrate.

11. The method of Claim 10 which uses the laminating adhesive composition of Claim 2.

12. The method of Claim 10 which uses the laminating adhesive composition of Claim 3.

13. The method of Claim 10 which uses the laminating adhesive composition of Claim 4.

14. The method of Claim 10 which uses the laminating adhesive composition of Claim 5.

15. In a vinyl-wood laminate, the improvement which comprises a laminating adhesive composition joining the vinyl and wood substrates which consists essentially of the adhesive composition of Claim 1.

16. The vinyl-wood laminate of Claim 15 in which the laminating adhesive consists essentially of the adhesive composition of Claim 2.

17. The vinyl-wood laminate of Claim 15 in which the laminating adhesive consists essentially of the adhesive composition of Claim 3.

18. The vinyl-wood laminate of Claim 15 in which the laminating adhesive consists essentially of the adhesive composition of Claim 4.

19. The vinyl-wood laminate of Claim 15 in which the laminating adhesive consists essentially of the adhesive composition of Claim 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 99, no. 4, 25th July 1983, page 57, abstract no. 23721u, Columbus, Ohio, US; & JP-A-58 11 576 (EIDAI CO., LTD) 22-01-1983 * Abstract * | 1-4,10-13 | C 09 J 131/04 C 08 G 18/62 // (C 09 J 131/04 C 09 J 129:04 C 09 J 175:04 ) |
| A,D | US-A-4 396 738 (POWELL et al.) * Claim 1 * | 1 | |
| | | | **TECHNICAL FIELDS SEARCHED (Int. Cl.5)** |
| | | | C 08 G C 08 L C 09 J |

The present search report has been drawn up for all claims

| Place of search | Date of completion of the search | Examiner |
|---|---|---|
| THE HAGUE | 05-01-1990 | SCHUELER D.H.H. |